# EUROPÄISCHE PATENTSCHRIFT

(11) **EP 3 420 293 B1**
(45) Veröffentlichungstag und Bekanntmachung des Hinweises auf die Patenterteilung: **05.08.2020**
(21) Anmeldenummer: 17706765.9
(22) Anmeldetag: 22.02.2017
(51) Int. Cl.: F28D 20/02

(54) **ENERGIESPEICHER**
ENERGY STORE
ACCUMULATEUR D'ÉNERGIE

(30) Priorität: 26.02.2016 DE 102016103473
(43) Veröffentlichungstag der Anmeldung: 02.01.2019
(73) Patentinhaber: Viessmann Werke GmbH & Co. KG, 35107 Allendorf (DE)
(72) Erfinder: FUCHS, Sven, 70186 Stuttgart (DE); RIBIC, Adnan, 70372 Stuttgart (DE); PFANNKUCH, Moritz, 70197 Stuttgart (DE); VAUPEL, Manfred, 35066 Frankenberg (DE)
(74) Vertreter: RPK Patentanwälte Reinhardt, Pohlmann und Kaufmann Partnerschaft mbB
(86) Internationale Anmeldenummer: PCT/EP2017/054072
(87) Internationale Veröffentlichungsnummer: WO 2017/144537

(56) Entgegenhaltungen:
- EP-A2- 2 428 760
- DE-A1- 2 837 091
- DE-A1-102004 052 447
- DE-A1-102010 006 882
- DE-U1-202015 008 836

## Beschreibung

### Stand der Technik

Die Erfindung betrifft einen Energiespeicher mit einem Gehäuse, das ein bei einem Phasenübergang latente Wärme aufweisendes Speichermedium umgibt, welches Speichermedium im Betrieb bestimmungsgemäß zum Erstarren in eine feste Phase und zum Schmelzen in eine flüssige Phase vorgesehen ist.

Aus der EP 2 686 633 A1 ist ein Latentwärmespeicher bekannt, bei dem Wasser als Speichermedium eingesetzt wird. Der Latentwärmespeicher versorgt ein Gebäude über eine Wärmepumpe mit Wärme. Der Latentwärmespeicher ist entladen, wenn das Wasser im Latentwärmespeicher erstarrt ist und ist aufgeladen, wenn das Wasser im Latentwärmespeicher flüssig ist. Das gezielte Einfrieren und Abtauen des Speichermediums erfolgt im jahreszeitlichen Wechsel. In der warmen Jahreszeit kann der Latentwärmespeicher auch zu Kühlzwecken eingesetzt werden. Das Erstarren und Verflüssigen des Speichermediums erfolgt jeweils kontinuierlich über lange Zeiträume im jahreszeitlichen Wechsel.

Die Patentschriften EP 2 428 760 A und US 6053006 A zeigen weitere relevante Beispiele von Energiespeichern.

Ein Entzugswärmetauscher entzieht dabei dem Wasser Wärme, wobei bei längerdauerndem Wärmeentzug im Winter das Wasser um den Entzugswärmetauscher langsam und kontrolliert einfriert. Mittels Wärmezufuhr über eine Regenerationswärmetauscher-Einrichtung kann das Eis um den Entzugswärmetauscher wieder aufgeschmolzen werden oder das Erstarren verzögert werden. Dabei kommt ein Regenerationswärmetauscher zum Einsatz, der als Rohrwendel in mehreren Windungen im Gehäuse angeordnet ist und den Entzugswärmetauscher umgibt. Durch den Entzugswärmetauscher ist es möglich, bis zu einem vorbestimmten maximalen Erstarrungsgrad des Speichermediums Wärme aus dem Energiespeicher zu entnehmen. Solange Eis im Energiespeicher enthalten ist, ist es auch möglich, besonders in der warmen Jahreszeit, Kühlleistung aus dem Energiespeicher bereitzustellen. Durch das Vorsehen von zusätzlichen Regenerationswärmetauschern kann eine flexiblere Regeneration erreicht werden.

### Offenbarung der Erfindung

Die Aufgabe der Erfindung ist es, einen Energiespeicher bereitzustellen, bei dem die Flexibilität der Regeneration des Speichermediums und die Regenerationsleistung des Energiespeichers verbessert werden kann.

Die Aufgabe wird durch die Merkmale des Hauptanspruchs gelöst. Günstige Ausgestaltungen und Vorteile der Erfindung ergeben sich aus den weiteren Ansprüchen, der Beschreibung und der Zeichnung.

Die Erfindung geht von einem Energiespeicher mit einem Gehäuse aus, das ein bei einem Phasenübergang latente Wärme aufweisendes Speichermedium umgibt, welches Speichermedium im Betrieb bestimmungsgemäß zum Erstarren in eine feste Phase und zum Schmelzen in eine flüssige Phase vorgesehen ist, mit einem ersten Speicherbereich im Inneren des Gehäuses, der zumindest zeitweise für feste Phase des Speichermediums vorgesehen ist und in dem ein Entzugswärmetauscher angeordnet ist, der zum Entzug von Wärme aus dem Speichermedium vorgesehen ist, wobei der erste Speicherbereich eine Längserstreckung aufweist, die im bestimmungsgemäßen Benutzungszustand als Hochachse ausgerichtet ist; und der Entzugswärmetauscher lagenweise in Richtung der Hochachse mit in den Lagen angeordneten Wärmetauscherrohren aufgebaut ist mit einem zweiten Speicherbereich im Inneren des Gehäuses, der für flüssige Phase des Speichermediums vorgesehen ist, wenn feste Phase im ersten Speicherbereich vorhanden ist, wobei der zweite Speicherbereich wenigstens bereichsweise als Hülle um den ersten Speicherbereich vorgesehen ist, wobei im zweiten Speicherbereich wenigstens ein Teil einer Regenerationseinrichtung angeordnet ist, die zur Zufuhr von Wärme in das Speichermedium vorgesehen ist.

Es wird vorgeschlagen, dass die Regenerationseinrichtung wenigstens eine erste und wenigstens eine zweite Durchlassvorrichtung für die flüssige Phase aufweist, wobei eine der Durchlassvorrichtungen zum Einleiten von flüssiger Phase in das Gehäuse und die andere der Durchlassvorrichtungen zum Herausleiten von flüssiger Phase aus dem Gehäuse vorgesehen ist. Die erste und/oder die zweite Durchlassvorrichtung weist einen Durchlassabschnitt mit zum Inneren des Gehäuses hin geöffneten Durchlassöffnungen für die flüssige Phase auf, wobei der Durchlassabschnitt mit seiner Längserstreckung wenigstens bereichsweise um die Hochachse des ersten Speicherbereichs angeordnet ist.

Der Energiespeicher ist vorzugsweise als Langzeitspeicher ausgelegt, bei dem das Speichermedium im ersten Speicherbereich durch Wärmeentzug über einen längeren Zeitraum gezielt und langsam erstarrt und anschließend durch Wärmezufuhr in den Energiespeicher wieder gezielt und langsam verflüssigt wird. Zweckmäßigerweise kann dies im jahreszeitlichen Wechsel erfolgen, so dass gegen Ende des Winters das Speichermedium im ersten Speicherberreich vollständig erstarrt ist und gegen Ende des Sommers das Speichermedium im ersten Speicherbereich vollständig verflüssigt ist.

Dadurch, dass wenigstens eine der Durchlassvorrichtungen im zweiten Speicherbereich angeordnet ist, ist diese in der gesamten regulären Betriebsphase des Energiespeichers von flüssigem Speichermedium umgeben, so dass gewährleistet ist, dass diese Durchlassvorrichtung stets flüssiges Speichermedium abführen kann. Zweckmäßigerweise kann die andere der Durchlassvorrichtungen ebenfalls innerhalb des zweiten Speicherbereichs, im flüssigen Speichermedium, vorgesehen sein.

Die erste Durchlassvorrichtung und die zweite Durchlassvorrichtung der Regenerationseinrichtung bilden einen offenen Regenerationswärmetauscher, der direkt mit dem Speichermedium aus dem Gehäuse als Wärmeträgermedium betrieben wird. Dabei kann zwischen den Durchlassvorrichtungen vorzugsweise eine strömungsmäßige Verbindung außerhalb des Gehäuses vorgesehen sein, so dass ein geschlossener Kreislauf gebildet wird. Dadurch, dass insbesondere gekühltes Speichermedium direkt aus Speichermedienvolumen in dem Gehäuse entnommen und insbesondere erwärmtes Speichermedium dem Speichermedienvolumen wieder zugeführt wird, kann die in das Speichermedienvolumen eingeführte Wärmemenge in weiten Grenzen sehr flexibel und bedarfsgerecht variiert werden. Zum Wärmeübertrag kann eine Strömung genutzt werden, die sich zwischen den Durchlassvorrichtungen im Speichermedium ausbildet. Dies ist durch den langsamen Aufbau der festen Phase in der Entladephase des Energiespeichers und das langsame Verflüssigen der festen Phase in der Aufladephase des Energiespeichers möglich. Eine Umwälzeinrichtung für das Speichermedium im Gehäuse ist nicht notwendig, sondern kann sogar den langsamen Aufbau und Abbau der festen Phase negativ beeinflussen.

Der erste Speicherbereich kann auf dem Boden des Gehäuses aufstehen oder davon beabstandet sein, so dass unter dem ersten Speicherbereich flüssiges Speichermedium vorhanden sein kann. Der zweite Speicherbereich kann den ersten Speicherbereich vollständig als Hülle umschließen oder den größten Teil des ersten Speicherbereichs als Hülle umgeben.

Im Stand der Technik findet dagegen ein indirekter Wärmeaustausch statt, da in den üblichen Regenerationswärmetauschern ein separates Wärmeträgermedium strömt, das nicht in das Speichermedium gelangt. Durch die Konstruktion des üblichen Regenerationswärmetauschers sind daher feste Grenzen für den Wärmeaustausch gesetzt.

Vorteilhaft kann die Strömungsverbindung zwischen erster Durchlassvorrichtung und zweiter Durchlassvorrichtung außerhalb des Gehäuses angeordnet sein. Dann kann besonders günstig wenigstens ein Wärmetauscher in der Strömungsverbindung vorgesehen sein. Denkbar ist jedoch auch, die Strömungsverbindung innerhalb des Gehäuses in einem speichermedienfreien Speicherbereich vorzusehen und dort Wärme zuzuführen.

Die Konstruktion der ersten und zweiten Durchlassvorrichtung gemäß der Erfindung kann sehr einfach sein, etwa ein einfaches Rohrstück innerhalb des Gehäuses. Die üblichen Regenerationswärmetauscher sind in ihrem maximalen Wärmeeintrag durch ihre Oberfläche festgelegt. Durch die erfindungsgemäße Regenerationseinrichtung in Form eines offenen Regenerationswärmetauschers kann durch eine Variation des Volumenstroms des darin strömenden Speichermediums sowie durch den Wärmeeintrag in der gehäuseexternen strömungsmäßigen Verbindung von erster Durchlassvorrichtung und zweiter Durchlassvorrichtung der Wärmeeintrag des offenen Regenerationswärmetauschers zuverlässig variiert und kontrolliert werden. Dies ist gerade bei einem erhöhten Kältebedarf vorteilhaft, wenn der Energiespeicher zur Kühlung eingesetzt werden soll.

Es kann auf einen üblichen gewendelten Regenerationswärmetauscher verzichtet werden. Denkbar ist jedoch, dass in einer weiteren Ausgestaltung zusätzlich ein oder mehrere übliche, gewendelte Regenerationswärmetauscher im Gehäuse vorgesehen sein können.

Das Gehäuse kann vorteilhaft im Erdreich angeordnet sein. Vorteilhaft kann das Gehäuse erdbodennah eingebaut werden. Erfindungsgemäss ist im ersten Speicherbereich ein Entzugswärmetauscher angeordnet, der lagenweise aufgebaut ist. In jeder Lage sind Wärmetauscherrohre angeordnet, etwa in Form einer flachen Spirale. Vorteilhafterweise kann das Gehäuse aus Beton gefertigt sein. Insbesondere ist es für den Betrieb als Langzeitspeicher vorteilhaft, wenn das Gehäuse nicht gegen die Umgebung isoliert ist. Bei einem Einbau ins Erdreich kann die relativ konstante Temperatur des Erdreichs im Sommer genutzt werden, um zusätzlich Wärme in das Speichermedium im Gehäuse einzubringen.

Durch geeignete Variation der Abstände von Wärmetauscherrohren und der Lagen kann das Erstarren des Speichermediums räumlich gesteuert erfolgen, z.B. von innen nach außen. Das Abschmelzen des Speichermediums kann umgekehrt von außen nach innen erfolgen. Mit Vorteil sind die Abstände der Wärmetauscherrohre und/oder die Abstände der Lagen des Entzugswärmetauschers so ausgebildet, dass bei Wärmeentzug ein kontinuierliches Erstarren erfolgt, insbesondere von innen nach außen und bei Wärmezufuhr ein kontinuierliches Auftauen des Speichermediums erfolgt, insbesondere von außen nach innen. Ist der Energiespeicher vollständig entladen, ist der erste Speicherbereich vollständig erstarrt, d.h. der Erstarrungsgrad ist 100%. Dagegen ist das Speichermedium im zweiten Speicherbereich, der den ersten Speicherbereich umgibt, nicht erstarrt.

Vorteilhaft sind die Abstände der Wärmetauscherrohre und/oder die Abstände der Lagen des Entzugswärmetauschers so gewählt, dass innerhalb des erstarrten Speichermediums im ersten Speicherbereich beim Erstarren und/oder Verflüssigen des Speichermediums keine von festem Speichermedium umgebenen Hohlräume mit verflüssigtem Speichermedium gebildet werden können. Damit kann verhindert werden, dass durch Volumenänderungen zwischen flüssiger Phase und erstarrter Phase des Speichermediums Gebiete mit Berstwirkung gebildet werden, welche den Entzugswärmetauscher oder sogar das Gehäuse beschädigen und/oder einen Wärmeübergang zwischen den Wärmetauscherrohren und dem Speichermedium ungünstig beeinflussen und/oder unkontrollierbar machen könnten.

Die erste und zweite Durchlassvorrichtung können jeweils über eine oder mehrere Durchlassöffnungen verfügen, durch die das Speichermedium aus der entsprechenden Durchlassvorrichtung in das Gehäuse eintreten und aus dem Gehäuse austreten kann. Vorteilhaft können mehrere Öffnungen so verteilt sein, dass eine möglichst homogene Verteilung des Speichermediums beim Verlassen des Gehäuses wie auch beim Zuführen des Speichermediums in das Gehäuse möglich ist. Zweckmäßigerweise können die Öffnungen gleichmäßig entlang der ersten und/oder zweiten Durchlassvorrichtung verteilt sein. Eine möglichst homogene Verteilung des Speichermediums beim Verlassen des Gehäuses bzw. des zweiten Speicherbereichs wie auch beim Zuführen des Speichermediums in das Gehäuse bzw. in den zweiten Speicherbereich erleichtert das gezielte und gerichtete Erstarren und Verflüssigen des Speichermediums im ersten Speicherbereich.

Gemäß einer günstigen Ausgestaltung kann das Speichermedium im vollständig flüssigen Zustand im ersten und zweiten Speicherbereich ein Gesamtvolumen einnehmen, wobei der erste Speicherbereich so vorgesehen ist, dass, bezogen auf das Gesamtvolumen, das Volumen des ersten Speicherbereichs zwischen mindestens 70% und höchstens 95%, vorzugsweise zwischen mindestens 75% und höchstens 90%, besonders bevorzugt zwischen mindestens 80% und höchstens 85%, des Gesamtvolumens beträgt. Dadurch ist gewährleistet, dass das erste Speichervolumen auch im vollständig entladenen Zustand, d.h. bei im ersten Speicherbereich vollständig erstarrtem Speichermedium, immer noch von flüssigem Speichermedium im zweiten Speicherbereich umgeben ist. Der Entzugswärmetauscher ist vorzugsweise so ausgelegt, dass die Bildung der festen Phase von selbst zum Erliegen kommt, wenn der maximale Entladegrad des Energiespeichers erreicht ist. Durch das abgestimmte Wechselspiel von Wärmeentzug durch den Entzugswärmetauscher und Wärmezufuhr durch die Regenerationseinrichtung bleibt das erstarrte Speichermedium innerhalb des ersten Speicherbereichs und kann nicht darüber hinaus erstarren. Vorteilhaft kann das Speichermedium im zweiten Speicherbereich einen mantelförmigen Raum mit flüssigem Speichermedium um den ersten Speicherbereich bilden. Dabei kann der mantelförmige Raum rund oder eckig ausgebildet sein.

Gemäß einer günstigen Ausgestaltung können die erste Durchlassvorrichtung und die zweite Durchlassvorrichtung außerhalb des ersten und zweiten Speicherbereichs mittels einer Strömungsverbindung strömungsmäßig verbunden sein. Auf diese Weise kann ein geschlossener Kreislauf gebildet werden. Optional kann ein Wärmetauscher im Kreislauf vorgesehen sein und/oder ein oder mehrere Wärmequellen mit dem Kreislauf verbunden sein.

Gemäß einer günstigen Ausgestaltung kann die eine der Durchlassvorrichtungen benachbart zu einem ersten Ende der Längserstreckung und die andere der Durchlassvorrichtungen benachbart zu einem gegenüberliegenden Ende der Längserstreckung des Entzugswärmetauschers angeordnet sein. Vorteilhaft kann eine Strömung innerhalb des Gehäuses erzeugt werden, mit der sowohl Aufbau wie auch Abbau des erstarrten Speichermediums im ersten Speicherbereich gut kontrollierbar sind. Die Strömungsrichtung kann auch abhängig von Betriebsparametern des Energiespeichers verändert werden.

Gemäß einer günstigen Ausgestaltung können in einem bestimmungsgemäßen Einbauzustand die Durchlassvorrichtungen in Richtung der Längserstreckung übereinander angeordnet sein. Vorteilhaft kann durch Gravitationswirkung im Betrieb eine Strömung innerhalb des Gehäuses von der Oberseite des Gehäuses zum Boden des Gehäuses erzeugt werden, mit der sowohl Aufbau wie auch Abbau des erstarrten Speichermediums im ersten Speicherbereich gut kontrollierbar sind.

Gemäß einer günstigen Ausgestaltung kann wenigstens eine der Durchlassvorrichtungen einen Durchlassabschnitt mit Durchlassöffnungen für das Speichermedium aufweisen, die insbesondere äquidistant entlang einer Längserstreckung des Durchlassabschnitts verteilt sein können. Auf diese Weise kann ein homogener Wärmeeintrag in das Speichermedium sowie eine homogene Entnahme des flüssigen Speichermediums aus dem zweiten Speicherbereich erreicht werden und so der Abbau und der Aufbau des erstarrten Speichermediums im ersten Speicherbereich besonders genau vorgegeben werden.

Gemäß einer günstigen Ausgestaltung kann eine der Durchlassvorrichtungen in einem im Betrieb speichermedienfreien Bereich im Gehäuse angeordnet sein. In diesem Fall kann die zweite Durchlassvorrichtung wie eine Dusche über dem zweiten Speicherbereich wirken, wenn durch diese Speichermedium eingeleitet wird und durch die erste Durchlassvorrichtung Speichermedium herausgeleitet wird. Denkbar ist auch eine Kombination von Segmenten der zweiten Durchlassvorrichtung, die sowohl innerhalb des zweiten Speicherbereichs als auch im speichermedienfreien Bereich angeordnet sind.

Gemäß einer günstigen Ausgestaltung kann die erste Durchlassvorrichtung einen Durchlassabschnitt aufweisen, der um den ersten Speicherbereich gelegt sein kann. Dies erlaubt, besonders mit äquidistanten Durchlassöffnungen im Durchlassabschnitt, eine homogene Entnahme des flüssigen Speichermediums aus dem zweiten Speicherbereich oder eine homogene Zuführung des flüssigen Speichermediums in den zweiten Speicherbereich. In einer Ausführung kann vorgesehen sein, zusätzlich den Durchlassabschnitt der zweiten Durchlassvorrichtung benachbart zum oberen Ende der Längserstreckung des ersten Speicherbereichs um den ersten Speicherbereich zu legen. Günstig ist, wenn die erste und/oder zweite Durchlassvorrichtung dabei insbesondere der Gehäuseform folgen. Zweckmäßig ist, wenn ein größerer Abstand zum ersten Speicherbereich vorgesehen ist als zur Gehäusewand.

Mit Vorteil können Öffnungen in der ersten und/oder zweiten Durchlassvorrichtung zur Gehäusewand gerichtet sein. Bei einer Entnahme von Speichermedium durch die entsprechende Durchlassvorrichtung kann erreicht werden, dass das Speichermedium dann frei von fester Phase ist und die Durchlassvorrichtung nicht mit fester Phase verstopft.

Gemäß einer günstigen Ausgestaltung kann die zweite Durchlassvorrichtung oberhalb des ersten Speicherbereichs angeordnet sein und der Durchlassabschnitt der zweiten Durchlassvorrichtung einen Querschnitt des ersten Speicherbereichs wenigstens bereichsweise überlappen. Dies ist besonders vorteilhaft, wenn die zweite Durchlassvorrichtung in einem speichermedienfreien Bereich im Gehäuse angeordnet ist.

Gemäß einer günstigen Ausgestaltung kann der Durchlassabschnitt der zweiten Durchlassvorrichtung an eine Form des Querschnitts des ersten Speicherbereichs angepasst sein. Damit kann die Strömung innerhalb des Speichermediums homogener gestaltet werden, was günstig für den Aufbau und den Abbau der festen Phase des Speichermediums ist.

Gemäß einer günstigen Ausgestaltung kann die zweite Durchlassvorrichtung zum Einleiten der flüssigen Phase in das Gehäuse vorgesehen sein und die erste Durchlassvorrichtung zum Herausleiten der flüssigen Phase aus dem Gehäuse vorgesehen sein. Dies ergibt eine günstige Strömung der in das Speichermedium eingeleiteten Wärme.

Gemäß einer günstigen Ausgestaltung kann eine Umschaltvorrichtung vorgesehen sein, um eine Strömungsrichtung der flüssigen Phase des Speichermediums in der Strömungsverbindung zwischen erster und zweiter Durchlassvorrichtung vorzugeben, insbesondere abhängig von Betriebsparametern des Energiespeichers vorzugeben. Die Einleitung von Wärme kann flexibel angepasst werden. Günstigerweise kann ein derartiger wechselnder Betrieb abhängig von Temperatur und/oder Dichte des flüssigen Speichermediums im Energiespeicher erfolgen.

Gemäß einer günstigen Ausgestaltung kann die feste Phase des Speichermediums im ersten Speicherbereich im Wesentlichen als Monolith ausgebildet sein. Bei quaderförmigen Gehäusen kann die feste Phase beispielsweise einen quaderförmigen Raum einnehmen, während bei zylindrischen Gehäusen die feste Phase einen zylindrischen Raum einnehmen kann. Dies ermöglicht eine besonders einfache Steuerung von Abbau und Aufbau von erstarrtem Speichermedium im ersten Speicherbereich. Der Querschnitt der festen Phase kann vorteilhaft durch einen Entzugswärmetauscher im ersten Speicherbereich gesteuert werden.

Gemäß einer günstigen Ausgestaltung kann der erste Speicherbereich so ausgebildet sein, dass die feste Phase des Speichermediums am Ende einer vorgegebenen Erstarrungsphase konzentrische Schalen bildet, die durch flüssige Phase beabstandet sind. In diesem Fall ragt der zweite Speicherbereich in den ersten Speicherbereich hinein. Die Schalen können in sich geschlossen sein oder auch durch beabstandete Segmente gebildet sein. Eine solche Konfiguration des erstarrten Speichermediums kann durch geeignete Variation der Abstände von Wärmetauscherrohren und der Lagen des Entzugswärmetauschers generiert werden, bei dem das Erstarren des Speichermediums räumlich gesteuert erfolgen kann, z.B. in jedem Zylinder von innen nach außen. Das Abschmelzen des Speichermediums kann umgekehrt von außen nach innen erfolgen.

Gemäß einer günstigen Ausgestaltung kann die Strömungsverbindung von erster und zweiter Durchlassvorrichtung einen Wärmetauscher, insbesondere einen Plattenwärmetauscher, umfassen. Ein derartiger Wärmetauscher kann Abwärme, beispielsweise aus einem mit dem Energiespeicher versorgten Gebäude, aufnehmen und dem Speichermedium in der Verbindung zuführen.

Gemäß einer günstigen Ausgestaltung kann die erste Durchlassvorrichtung beabstandet vom Gehäuse angeordnet sein. Dadurch kann die erste Durchlassvorrichtung gegen die Umgebung des Gehäuses besser isoliert sein.

### Zeichnung

Weitere Vorteile ergeben sich aus der folgenden Zeichnungsbeschreibung. In den Figuren sind Ausführungsbeispiele der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: in Schnittdarstellung ein Ausführungsbeispiel der Erfindung mit erstem und zweitem Speicherbereich und einem Entzugswärmetauscher im ersten Speicherbereich;
- Fig. 2: in Schnittdarstellung das Ausführungsbeispiel der Erfindung nach Figur 1 mit zylinderförmiger fester Phase des Speichermediums im ersten Speicherbereich,
- Fig. 3: eine Variante des Ausführungsbeispiels aus Figur 2 mit fester Phase des Speichermediums in konzentrischen Zylindern im ersten Speicherbereich,
- Fig. 4: in Draufsicht eine Variante einer Anordnung einer ersten Durchlassvorrichtung und einer zweiten Durchlassvorrichtung in einem Gehäuse.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

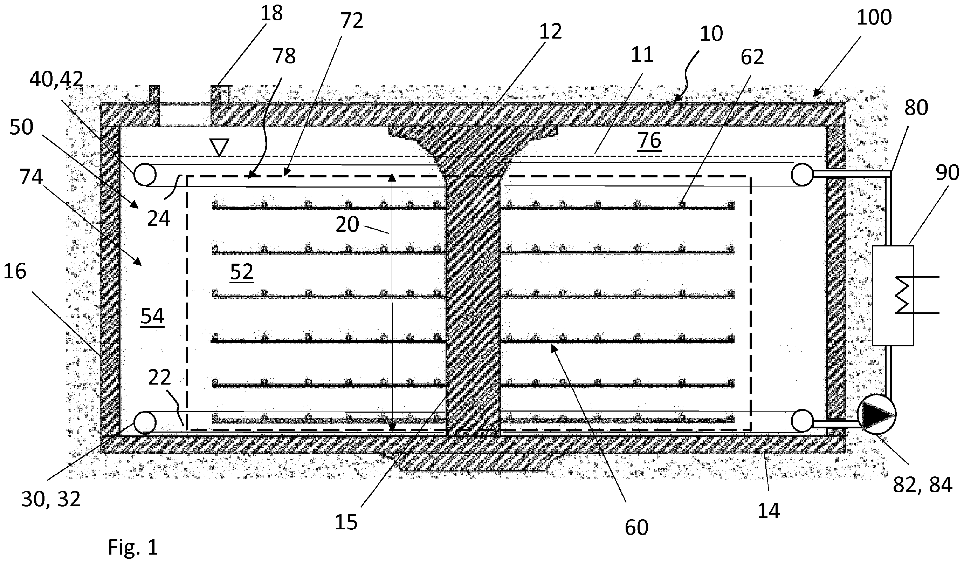

Figur 1 zeigt in Schnittdarstellung ein Ausführungsbeispiel eines Energiespeichers 100 nach einem Ausführungsbeispiel der Erfindung. Der Energiespeicher 100 weist ein beispielsweise im Erdreich vergrabenes Gehäuse 10 mit einem Deckel 12 und einem Boden 14 auf. In dem Deckel 12 ist eine Einstiegsöffnung 18 angeordnet, welche das Betreten des Gehäuses 10 erlaubt. Das Gehäuse 10 kann als Zylinder mit einer kreisförmigen Seitenwand 16 ausgebildet sein. Denkbar sind jedoch auch andere Querschnitte des Gehäuses 10. Der Deckel 12 ist mit einer Stütze 15 gegen den Boden 14 abgestützt. Bei kleineren Größen des Gehäuses 10 kann auf die Stütze 15 verzichtet werden. Die Stütze 15 erlaubt insbesondere ein Befahren des Deckels 12, etwa auf einem Parkplatz oder dergleichen. Das Gehäuse 10 kann insbesondere aus Beton gebildet sein.

Im Gehäuse 10 ist ein Speichermedium 50 bis zu einem vorgegebenen Pegel 11 eingefüllt. Darüber ist ein speichermedienfreier Speicherbereich 76 angeordnet, der die Gefahr eines Berstens des Gehäuses 10 beim Erstarren des Speichermediums 50 verringert. Das Speichermedium 50 kann beispielsweise Wasser sein, das bei geringen Temperaturen zu Eis erstarrt und am Gefrierpunkt beim Aufschmelzen eine große Menge an latenter Wärme aufnehmen bzw. beim Einfrieren abgeben kann, ohne seine Temperatur zu ändern.

Unterhalb des Pegels 11 ist ein erster Speicherbereich 72 vorgesehen, der im Betrieb bestimmungsgemäß eine feste Phase 52 des Speichermediums 50 beinhaltet, und ein zweiter Speicherbereich 74 für die flüssige Phase 54 des Speichermediums 50, der den ersten Speicherbereich 72 umgibt.

Das Volumen der festen Phase 52 des Speichermediums 50 variiert von einem verschwindenden Minimum, wenn gar keine feste Phase 52 vorhanden ist, bis zu einem Maximum, wenn eine maximale Menge des Speichermediums 50 in die feste Phase 52 übergegangen ist. Dabei ist die Auslegung des Energiespeichers zweckmäßigerweise so gewählt, dass dann immer noch flüssige Phase 54 um den ersten Speicherbereich 72 auch im entladenen Zustand des Energiespeichers 100 vorhanden ist. Die Bildung der festen Phase 52 kann bei vollständiger Entladung des Energiespeichers 100 selbsttätig vollständig zum Erliegen kommen.

Innerhalb des ersten Speicherbereichs 72 ist ein Entzugswärmetauscher 60 angeordnet, der mehrere übereinander angeordnete, nicht näher bezeichnete Lagen aufweist, auf denen Wärmetauscherrohre 62 beispielsweise spiralförmig gewickelt sind, die von einem Wärmeträgermedium durchströmt sind. Ein solcher Entzugswärmetauscher ist beispielsweise aus der EP 1 807 672 B1 bekannt. Der Entzugswärmetauscher 60 ist beispielsweise mit einer Wärmepumpe gekoppelt und stellt Wärme aus dem Energiespeicher 100 bereit. Im Betrieb des Entzugswärmetauschers 60 gelingt ein ganz kontrolliertes Aufbauen und Abbauen der festen Phase 52 im ersten Speicherbereich 72. Dies erfolgt jeweils über lange Zeiträume im jahreszeitlichen Wechsel.

Der erste Speicherbereich 72 weist eine Längserstreckung 20 mit einem unteren Ende 22 nahe des Bodens 14 und einem gegenüberliegenden oberen Ende 24 auf. Im bestimmungsgemäß eingebauten Benutzungszustand ist die Längserstreckung 20 als Hochachse ausgerichtet. Der erste Speicherbereich 72 weist einen Querschnitt 78 auf, der durch den Entzugswärmetauscher 60 bestimmt ist.

Das Speichermedium 50 nimmt im vollständig flüssigen Zustand im ersten und zweiten Speicherbereich 72, 74 ein Gesamtvolumen ein, wobei der erste Speicherbereich 72 so vorgesehen ist, dass das bestimmungsgemäß maximale Volumen des Speichermediums 50 im erstarrten Zustand im ersten Speicherbereich 72, bezogen auf dieses Gesamtvolumen, zwischen mindestens 70% und höchstens 95%, vorzugsweise zwischen mindestens 75% und höchstens 90%, besonders bevorzugt zwischen mindestens 80% und höchstens 85%, des Gesamtvolumens beträgt. Somit ist sichergestellt, dass die feste Phase 52 des Speichermediums 50 von flüssiger Phase 54 des Speichermediums 50 umgeben ist. Bei einem zylindrischen ersten Speicherbereich 72 umfasst der zweite Speicherbereich 74 einen Ringraum um den Zylinder mit fester Phase 52 des Speichermediums

Benachbart zum unteren Ende 22 ist eine erste Durchlassvorrichtung 30 vorgesehen, während benachbart zum gegenüberliegenden Ende 24 der Längserstreckung 20 eine zweite Durchlassvorrichtung 40 vorgesehen ist. Die erste Durchlassvorrichtung 30 umfasst einen Durchlassabschnitt 32, der in diesem Beispiel als gekrümmtes Rohr ausgebildet ist. Bei quaderförmigen Gehäusen kann das Rohr auch dem Querschnitt des quaderförmigen Gehäuses folgen. Die zweite Durchlassvorrichtung 40 umfasst ebenso einen Durchlassabschnitt 42, der als gekrümmtes Rohr ausgebildet ist. Die Durchlassvorrichtungen 30, 40 sind Bestandteil einer Regenerationseinrichtung und bilden einen offenen Regenerationswärmetauscher.

Der Durchlassabschnitt 32 der ersten Durchlassvorrichtung 30 mit den äquidistanten Öffnungen kann für eine sichere eisfreie Entnahme zur Gehäusewand 16 ausgerichtet werden. Die Rohre können jeweils als Rohrsegmente, z.B. Halbkreise, ausgebildet sein, die an ihren Enden verschlossen sind, oder die Rohre können in sich geschlossen sein, z.B. einen Vollkreis bilden oder nahezu einen Vollkreis bilden. Entlang der Längserstreckung der Rohre können jeweils äquidistante Öffnungen für das flüssige Speichermedium 54 vorgesehen sein.

Durch die erste Durchlassvorrichtung 30 wird zumindest in einem Betriebsmode im Speicherbetrieb flüssige Phase 54 des Speichermediums 50 aus dem zweiten Speicherbereich 74 entnommen und durch die zweite Durchlassvorrichtung 40 wieder zugeführt. Außerhalb des Gehäuses 10 sind erste Durchlassvorrichtung 30 und zweite Durchlassvorrichtung 40 strömungsmäßig mittels einer Strömungsverbindung 80 verbunden. In der Strömungsverbindung 80 zwischen erster Durchlassvorrichtung 30 und zweiter Durchlassvorrichtung 40 ist ein Wärmetauscher 90, beispielsweise ein Plattenwärmetauscher, angeordnet, der vorteilhaft Wärme, insbesondere Abwärme eines Gebäudes oder dergleichen, in das in der Strömungsverbindung 80 fließende Speichermedium 50 eintragen kann.

Das flüssige Speichermedium 50 kann mittels einer Förderpumpe 82 über die erste Durchlassvorrichtung 30 in dem zweiten Speicherbereich 74 zur zweiten Durchlassvorrichtung 40 gefördert werden.

Die Strömungsverbindung 80 ist in den Figuren beispielhaft durch die Gehäusewand 16 geführt. Die üblichen Leitungen zu den Durchlassvorrichtungen 30, 40 wie auch zum Entzugswärmetauscher 60 können jedoch zweckmäßigerweise durch den Deckel 12 des Gehäuses 10 geführt oder an anderer geeigneter Stelle vorgesehen sein.

Im bestimmungsgemäßen Einbauzustand ist die zweite Durchlassvorrichtung 40 oberhalb der ersten Durchlassvorrichtung 30 angeordnet, so das erwärmtes Speichermedium 50 im Gehäuse 10 von oben nach unten strömen kann. Die Strömung ist vorteilhaft zum Steuern des Aufbaus und Abbaus der festen Phase 52. Die zweite Durchlassvorrichtung 40 ist in diesem Beispiel unterhalb des Pegels 11 des Speichermediums 50 angeordnet.

Prinzipiell kann der Betrieb auch umgekehrt erfolgen, so dass ein wechselnder Betrieb abhängig von Temperatur und Dichte des Speichermediums 50 im Gehäuse 10 erfolgen kann. Um die Strömungsrichtung umzukehren, kann eine Umkehrvorrichtung 84 vorgesehen sein, so dass durch die erste Durchlassvorrichtung 30 Speichermedium 50 eintreten und durch die zweite Durchlassvorrichtung 40 Speichermedium herausgeleitet werden kann. Dies kann beispielsweise über eine Pumpe mit Drehrichtungsumkehr erfolgen.

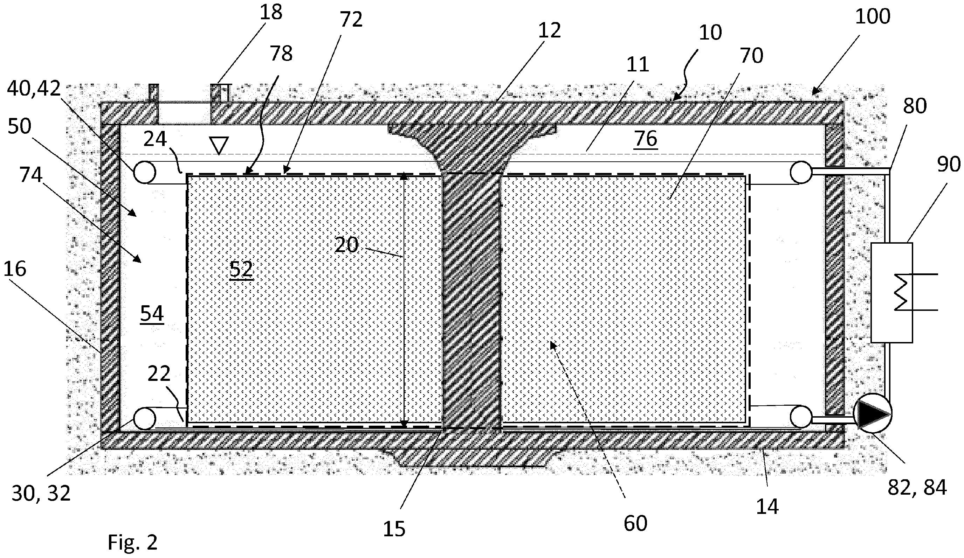

Figur 2 zeigt in Schnittdarstellung das Ausführungsbeispiel des Energiespeichers 100 der Erfindung nach Figur 1, bei dem der Entzugswärmetauscher 60 eine vorgesehene maximale Menge des Speichermediums 50 in die feste Phase 52 überführt hat. Zur Vermeidung unnötiger Wiederholungen wird zur Beschreibung der einzelnen Komponenten des Energiespeichers 100 auf Figur 1 verwiesen.

Mit dem verwendeten Entzugswärmetauscher 60 gelingt ein gesteuertes Wachstum der festen Phase 52 um die Wärmetauscherrohre 62 (Figur 1) des Entzugswärmetauschers 60, die schließlich zusammenwächst, wobei die feste Phase 52 von innen nach außen wächst. Die feste Phase 52 des Speichermediums 50 bildet mit dem beschriebenen Entzugswärmetauscher 60 einen Monolithen, in dem der Entzugswärmetauscher 60 angeordnet ist.

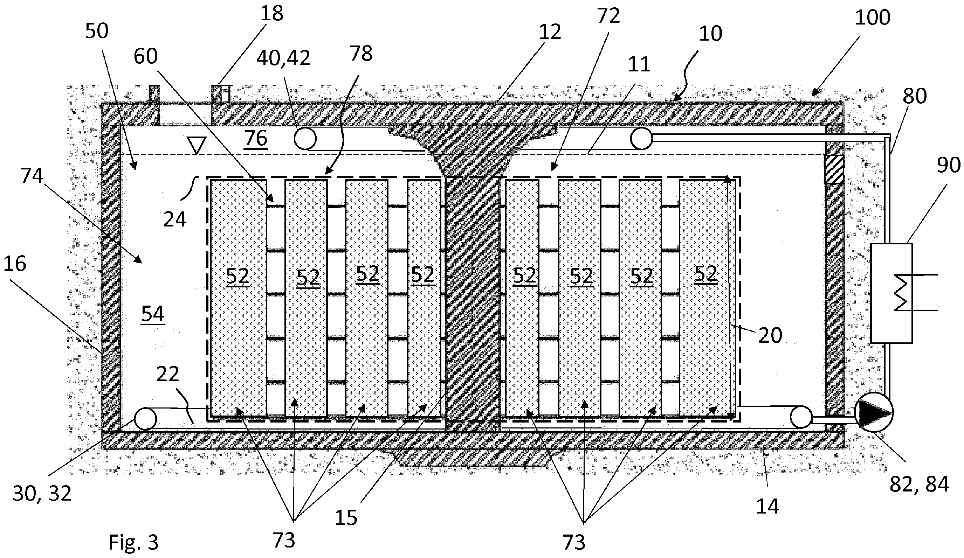

Figur 3 zeigt eine Variante des Ausführungsbeispiels aus Figur 2. Zur Vermeidung unnötiger Wiederholungen wird zur Beschreibung der einzelnen Komponenten des Energiespeichers 100 auf Figur 1 verwiesen.

In der dargestellten Variante bildet sich die feste Phase 52 des Speichermediums 50 nicht als monolithischer Block wie in Figur 2 aus, sondern als monolithische konzentrische Schalen 73, beispielsweise als konzentrische Zylinder. Dies kann erreicht werden, indem die Wärmetauscherrohre 62 (Figur 1) des Entzugswärmetauschers 60 in geeigneter Weise in ihren Abständen variiert werden.

Bei dieser Variante kann es sehr vorteilhaft sein, die zweite Durchlassvorrichtung 40 im speichermedienfreien Speicherbereich 76 anzuordnen und das erwärmte Speichermedium 50 durch diese in das Gehäuse 10 einzulassen.

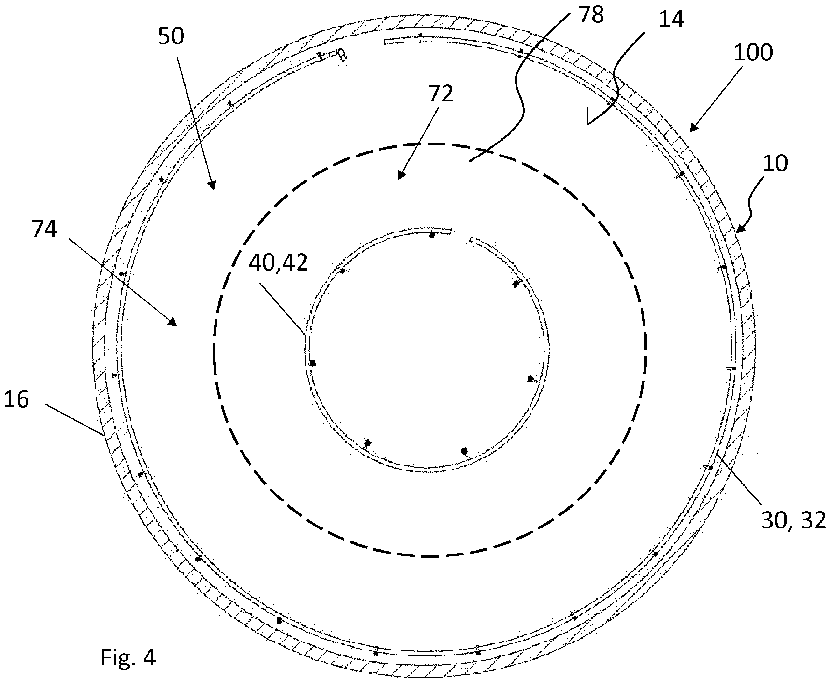

Figur 4 zeigt in Draufsicht eine Variante einer Anordnung der ersten Durchlassvorrichtung 30 und der zweiten Durchlassvorrichtung 40, wie sie für die Ausgestaltung in Figur 3 günstig ist.

Die erste Durchlassvorrichtung 30 mit einem Durchlassabschnitt 32 ist aus einem nahezu geschlossen-kreisförmig gebogenen Rohr gebildet, das beabstandet zum Gehäuse 10 im zweiten Speicherbereich 74 angeordnet ist. Die zweite Durchlassvorrichtung 40 ist aus einem Durchlassabschnitt 42 aus einem nahezu geschlossen-kreisförmig gebogenen Rohr gebildet, und zwar so, dass dieses innerhalb des Querschnitts des ersten Speicherbereichs 72 und oberhalb davon im speichermedienfreien Speicherbereich angeordnet ist. Tritt warmes Speichermedium 50 aus der zweiten Durchlassvorrichtung 40 aus, kann dieses zu beiden Seiten der konzentrischen Zylinder in dem ersten Speicherbereich 72 fließen, was für die Steuerung des Wachstums der festen Phase 52 vorteilhaft ist.

In den verschiedenen Ausgestaltungen des Energiespeichers 100 sieht ein günstiges Betriebsverfahren vor, dass in einer Entladephase Wärme aus dem Energiespeicher 100 entnommen wird, bis der Energiespeicher 100 vollständig entladen ist und das Speichermedium 50 im ersten Speicherbereich 72 hohlraumfrei als feste Phase 52 vorliegt. Die feste Phase 52 wird dabei kontinuierlich am Entzugswärmetauscher 60 quer zur Längserstreckung 20 des ersten Speicherbereichs 72 von innen nach außen wachsend gebildet. Im zweiten Speicherbereich 74 liegt das Speichermedium 50 auch im entladenen Zustand des Energiespeichers 100 als flüssige Phase 54 vor. Optional kann auch in der Entladephase Wärme über den offenen Regenerationswärmetauscher im zweiten Speicherbereich 74 in das Speichermedium 50 eingeführt werden, um die Geschwindigkeit der Bildung der festen Phase 52 im ersten Speicherbereich 72 zu beeinflussen.

In einer folgenden Regenerationsphase wird die feste Phase 52 im ersten Speicherbereich 72 wieder verflüssigt, bis die feste Phase 52 im ersten Speicherbereich 72 wieder als flüssige Phase 54 des Speichermediums 50 vorliegt, indem Wärme über die Regenerationseinrichtung in das Speichermedium 50 zugeführt wird. Das Verflüssigen der festen Phase 52 im ersten Speicherbereich 72 erfolgt dabei in umgekehrter Richtung wie das Erstarren in der Entladephase. Optional kann in der Regenerationsphase auch über den Entzugswärmetauscher 60 im ersten Speicherbereich 72 Wärme aus dem Speichermedium 50 abgeführt werden, um die Geschwindigkeit der Verflüssigung der festen Phase 52 im ersten Speicherbereich 72 zu beeinflussen.

## Patentansprüche

1. Energiespeicher (100) mit einem Gehäuse (10), das ein bei einem Phasenübergang latente Wärme aufweisendes Speichermedium (50) umgibt, das im Betrieb bestimmungsgemäß zum Erstarren in eine feste Phase (52) und zum Schmelzen in eine flüssige Phase (54) vorgesehen ist, mit einem ersten Speicherbereich (72) im Inneren des Gehäuses (10), der zumindest zeitweise für feste Phase (52) des Speichermediums (50) vorgesehen und in dem ein Entzugswärmetauscher (60) angeordnet ist, der zum Entzug von Wärme aus dem Speichermedium (50) vorgesehen ist, wobei der erste Speicherbereich (72) eine Längserstreckung (20) aufweist, die im bestimmungsgemäßen Benutzungszustand als Hochachse ausgerichtet ist, und der Entzugswärmetauscher (60) lagenweise in Richtung der Hochachse (20) mit in den Lagen angeordneten Wärmetauscherrohren aufgebaut ist, mit einem zweiten Speicherbereich (74) im Inneren des Gehäuses (10), der für flüssige Phase (54) des Speichermediums (50) vorgesehen ist, wenn feste Phase (52) im ersten Speicherbereich (72) vorhanden ist, wobei der zweite Speicherbereich (74) wenigstens bereichsweise als Hülle um den ersten Speicherbereich (72) vorgesehen ist, wobei im zweiten Speicherbereich (74) wenigstens ein Teil einer Regenerationseinrichtung angeordnet ist, die zur Zufuhr von Wärme in das Speichermedium (50) vorgesehen ist,
**dadurch gekennzeichnet, dass**
die Regenerationseinrichtung wenigstens eine erste und wenigstens eine zweite Durchlassvorrichtung (30, 40) für die flüssige Phase (54) aufweist und wenigstens eine der Durchlassvorrichtungen (30, 40) im zweiten Speicherbereich (74) angeordnet ist, wobei eine der Durchlassvorrichtungen (40, 30) zum Einleiten von flüssiger Phase (54) in das Gehäuse (10) und die andere der Durchlassvorrichtungen (30, 40) zum Herausleiten von flüssiger Phase (54) aus dem Gehäuse (10) vorgesehen ist, wobei die erste und/oder die zweite Durchlassvorrichtung (30, 40) einen Durchlassabschnitt (32, 42) mit einer oder mehreren Durchlassöffnungen im Innern des Gehäuses (10) für die flüssige Phase (54) aufweist, durch die das Speichermedium aus der entsprechenden Durchlassvorrichtung (30, 40) in das Gehäuse (10) eintreten und aus dem Gehäuse (10) austreten kann, wobei der Durchlassabschnitt (32, 42) mit seiner Längserstreckung wenigstens bereichsweise um die Hochachse (20) angeordnet ist.

2. Energiespeicher nach Anspruch 1, **dadurch gekennzeichnet, dass** das Speichermedium (50) im vollständig flüssigen Zustand im ersten und zweiten Speicherbereich (72, 74) ein Gesamtvolumen einnimmt, wobei der erste Speicherbereich (72) so vorgesehen ist, dass das bestimmungsgemäß maximale Volumen des erstarrten Speichermediums (52) im ersten Speicherbereich (72), bezogen auf das Gesamtvolumen, zwischen mindestens 70% und höchstens 95%, vorzugsweise zwischen mindestens 75% und höchstens 90%, besonders bevorzugt zwischen mindestens 80% und höchstens 85%, des Gesamtvolumens beträgt.

3. Energiespeicher nach Anspruch 1 oder 2, **dadurch gekennzeichnet, dass** die erste Durchlassvorrichtung (30) und die zweite Durchlassvorrichtung (40) außerhalb des ersten und zweiten Speicherbereichs (72, 74) mittels einer Strömungsverbindung (80) strömungsmäßig verbunden sind.

4. Energiespeicher nach einem der vorhergehenden Ansprüche, **dadurch gekennzeichnet, dass** die eine der Durchlassvorrichtungen (30, 40) benachbart zu einem ersten Ende (22) der Längserstreckung (20) und die andere der Durchlassvorrichtungen (40, 30) benachbart zu einem gegenüberliegenden Ende (24) der Längserstreckung (20) des Entzugswärmetauschers (60) angeordnet ist.

5. Energiespeicher nach einem der vorhergehenden Ansprüche, **dadurch gekennzeichnet, dass** in einem bestimmungsgemäßen Einbauzustand die Durchlassvorrichtungen (30, 40) in Richtung der Längserstreckung (20) übereinander angeordnet ist.

6. Energiespeicher nach einem der vorhergehenden Ansprüche, **dadurch gekennzeichnet, dass** wenigstens eine der Durchlassvorrichtungen (30, 40) einen Durchlassabschnitt (32, 42) mit Durchlassöffnungen für das Speichermedium (50) aufweist, die entlang einer Längserstreckung des Durchlassabschnitts (32, 42) verteilt sind, insbesondere äquidistant verteilt sind.

7. Energiespeicher nach einem der vorhergehenden Ansprüche, **dadurch gekennzeichnet, dass** eine der Durchlassvorrichtungen (40, 30) in einem im Betrieb speichermedienfreien Bereich (76) im Gehäuse (10) angeordnet ist.

8. Energiespeicher nach Anspruch 7, **dadurch gekennzeichnet, dass** die Durchlassvorrichtung (40) oberhalb des ersten Speicherbereichs (72) angeordnet ist und der Durchlassabschnitt (42) dieser Durchlassvorrichtung (40) einen Querschnitt (78) des ersten Speicherbereichs (72) wenigstens bereichsweise überlappt.

9. Energiespeicher nach einem der Ansprüche 7 bis 8, **dadurch gekennzeichnet, dass** der Durchlassabschnitt (42) der zweiten Durchlassvorrichtung (40) an eine Form des Querschnitts (78) des ersten Speicherbereichs (72) angepasst ist.

10. Energiespeicher nach einem der vorhergehenden Ansprüche, **dadurch gekennzeichnet, dass** die zweite Durchlassvorrichtung (40) zum Einleiten der flüssigen Phase (54) in das Gehäuse (10) vorgesehen ist und die erste Durchlassvorrichtung (30) zum Herausleiten der flüssigen Phase (54) aus dem Gehäuse (10) vorgesehen ist.

11. Energiespeicher nach einem der vorhergehenden Ansprüche, **dadurch gekennzeichnet, dass** eine Umschaltvorrichtung (84) vorgesehen ist, um eine Strömungsrichtung der flüssigen Phase (54) des Speichermediums (50) in der Strömungsverbindung (80) zwischen erster und zweiter Durchlassvorrichtung (30, 40) vorzugeben, insbesondere abhängig von Betriebsparametern des Energiespeichers vorzugeben.

12. Energiespeicher nach einem der vorhergehenden Ansprüche, **dadurch gekennzeichnet, dass** die feste Phase (52) des Speichermediums (50) im ersten Speicherbereich (72) im Wesentlichen als Monolith ausgebildet ist.

13. Energiespeicher nach einem der vorhergehenden Ansprüche, **dadurch gekennzeichnet, dass** der erste Speicherbereich (72) so ausgebildet ist, dass die feste Phase (52) des Speichermediums (50) am Ende einer vorgegebenen Erstarrungsphase konzentrische Schalen (73) bildet, die durch flüssige Phase (54) beabstandet sind.

14. Energiespeicher nach einem der vorhergehenden Ansprüche, **dadurch gekennzeichnet, dass** die Strömungsverbindung (80) von erster Durchlassvorrichtung (30) und zweiter Durchlassvorrichtung (40) einen Wärmetauscher (90), insbesondere einen Plattenwärmetauscher, umfasst.

15. Energiespeicher nach einem der vorhergehenden Ansprüche, **dadurch gekennzeichnet, dass** die erste Durchlassvorrichtung (30) beabstandet vom Gehäuse (10) angeordnet ist.

## Claims

1. Energy store (100) with a housing (10), which surrounds a storage medium (50) having latent heat during a phase transfer, which is provided during operation as intended for solidifying into a solid phase (52) and for melting into a liquid phase (54), comprising within the housing (10) a first storage region (72), which is provided at least at times for a solid phase (52) of the storage medium (50) and in which an extractor heat exchanger (60) is arranged, which is provided for extracting heat from the storage medium (50), wherein the first storage region (72) has a longitudinal extension (20), which is oriented as a vertical axis in the intended usage state, and the extractor heat exchanger (60) is constructed in layers in the direction of the vertical axis (20) with heat exchanger tubes arranged in the layers, comprising a second storage region (74) within the housing (10), which is intended for a liquid phase (54) of the storage medium (50), when a solid phase (52) is present in the first storage region (72), wherein at least regions of the second storage region (74) are provided as a casing around the first storage region (72), wherein at least one portion of a regeneration device is arranged in the second storage region (74), which is provided for supplying heat to the storage medium (50),
**characterised in that**
the regeneration device has at least one first and at least one second passage device (30, 40) for the liquid phase (54) and at least one of the passage devices (30, 40) is arranged in the second storage region (74), wherein one of the passage devices (40, 30) is provided for introducing a liquid phase (54) into the housing (10) and the other of the passage devices (30, 40) is provided for discharging the liquid phase (54) from the housing (10), wherein the first and/or the second passage device (30, 40) has a passage section (32, 42) with one or more passage openings inside the housing (10) for the liquid phase (54), through which the storage medium can enter from the corresponding passage device (30, 40) into the housing (10) and can escape from the housing (10), wherein the passage section (32, 42) is arranged with its longitudinal extension at least in regions about the vertical axis (20).

2. Energy store according to claim 1, **characterised in that** the storage medium (50) takes up a total volume in the completely liquid state in the first and second storage region (72, 74), wherein the first storage region (72) is provided such that the intended maximum volume of the solidified storage medium (52) in the first storage region (72), based on the total volume, is between at least 70% and at most 95%, preferably between at least 75% and at most 90%, most preferably between at least 80% and at most 85%, of the total volume.

3. Energy store according to claim 1 or 2, **characterised in that** the first passage device (30) and the second passage device (40) are connected in terms of flow outside the first and second storage region (72, 74) by means of a flow connection (80).

4. Energy store according to any one of the preceding claims, **characterised in that** one of the passage devices (30, 40) is arranged adjacent to a first end (22) of the longitudinal extension (20), and the other of the passage devices (40, 30) is arranged adjacent to an opposite end (24) of the longitudinal extension (20) of the extractor heat exchanger (60).

5. Energy store according to any one of the preceding claims, **characterised in that**, in an intended installation state, the passage devices (30, 40) are arranged one above the other in the direction of the longitudinal extension (20).

6. Energy store according to any one of the preceding claims, **characterised in that** at least one of the passage devices (30, 40) has a passage section (32, 42) with passage openings for the storage medium (50) which are distributed along a longitudinal extension of the passage section (32, 42), in particular are distributed equidistantly.

7. Energy store according to any one of the preceding claims, **characterised in that** one of the passage devices (40, 30) is arranged in a region (76) in the housing (10) which is free of storage media during operation.

8. Energy store according to claim 7, **characterised in that** the passage device (40) is arranged above the first storage region (72) and the passage section (42) of this passage device (40) overlaps a cross-section (78) of the first storage region (72) at least in regions.

9. Energy store according to any one of claims 7 to 8, **characterised in that** the passage section (42) of the second passage device (40) is adapted to a shape of the cross-section (78) of the first storage region (72).

10. Energy store according to any one of the preceding claims, **characterised in that** the second passage device (40) is provided for introducing the liquid phase (54) into the housing (10) and the first passage device (30) is provided for discharging the liquid phase (54) out of the housing (10).

11. Energy store according to any one of the preceding claims, **characterised in that** a switching device (84) is provided in order to specify a flow direction of the liquid phase (54) of the storage medium (50) in the flow connection (80) between the first and second passage devices (30, 40), in particular depending on the operating parameters of the energy store.

12. Energy store according to any one of the preceding claims, **characterised in that** the solid phase (52) of the storage medium (50) in the first storage region (72) is essentially designed as a monolith.

13. Energy store according to any one of the preceding claims, **characterised in that** the first storage region (72) is designed such that the solid phase (52) of the storage medium (50) forms concentric shells (73) at the end of a predetermined solidification phase, which shells are spaced apart by a liquid phase (54).

14. Energy store according to any one of the preceding claims, **characterised in that** the flow connection (80) of the first passage device (30) and the second passage device (40) comprises a heat exchanger (90), in particular a plate heat exchanger.

15. Energy store according to any one of the preceding claims, **characterised in that** the first passage device (30) is arranged spaced apart from the housing (10).

## Revendications

1. Accumulateur d'énergie (100) avec un carter (10) qui entoure un fluide d'accumulation (50) présentant de la chaleur latente lors d'une transition de phase, qui est prévu en fonctionnement selon les disposition pour la solidification en une phase solide (52) et pour la fonte en une phase liquide (54), avec une première zone d'accumulation (72) à l'intérieur du carter (10) qui est prévue au moins temporairement pour la phase solide (52) du fluide d'accumulation (50) et dans lequel est agencé un échangeur de chaleur d'extraction (60) qui est prévu pour l'extraction de chaleur du fluide d'accumulation (50), dans lequel la première zone d'accumulation (72) présente une étendue longitudinale (20) qui est orientée dans l'état d'utilisation selon les dispositions comme axe vertical, et l'échangeur de chaleur d'extraction (60) est constitué par couches en direction de l'axe vertical (20) avec des tubes d'échangeur de chaleur agencés dans les couches,
avec une seconde zone d'accumulation (74) à l'intérieur du carter (10) qui est prévue pour la phase liquide (54) du fluide d'accumulation (50) lorsque la phase solide (52) est présente dans la première zone de d'accumulation (72), dans lequel la seconde zone d'accumulation(74) est prévue au moins par endroits comme enveloppe autour de la première zone d'accumulation (72), dans lequel, dans la seconde zone d'accumulation (74), au moins une partie d'un dispositif de régénération est agencée, qui est prévue pour l'amenée de chaleur dans le fluide d'accumulation (50),
**caractérisé en ce que**
le dispositif de régénération présente au moins un premier et au moins un second dispositif de passage (30, 40) pour la phase liquide (54) et au moins un des dispositifs de passage (30, 40) est agencé dans la seconde zone d'accumulation (74), dans lequel un des dispositifs de passage (40, 30) est prévu pour l'introduction de phase liquide (54) dans le carter (10) et l'autre des dispositifs de passage (30, 40) pour la conduite de phase liquide (54) hors du carter (10), dans lequel le premier et/ou le second dispositif de passage (30, 40) présente une section de passage (32, 42) avec une ou plusieurs ouvertures de passage à l'intérieur du carter (10) pour la phase liquide (54), par lesquelles le fluide d'accumulation du dispositif de passage (30, 40) correspondant peut entrer dans le carter (10) et peut sortir du carter (10), dans lequel la section de passage (32, 42) est agencée avec son étendue longitudinale au moins par endroits autour de l'axe vertical (20).

2. Accumulateur d'énergie selon la revendication 1, **caractérisé en ce que** le fluide d'accumulation (50) occupe un volume total à l'état complètement liquide dans la première et seconde zone d'accumulation (72, 74), dans lequel la première zone d'accumulation (72) est prévue de sorte que le volume maximal selon les dispositions du fluide d'accumulation (52) solidifié s'élève dans la première zone d'accumulation (72), par rapport au volume total, entre au moins 70 % et au plus 95 %, de préférence entre au moins 75 % et au plus 90 %, de manière particulièrement préférée entre au moins 80 % et au plus 85 % du volume total.

3. Accumulateur d'énergie selon la revendication 1 ou 2, **caractérisé en ce que** le premier dispositif de passage (30) et le second dispositif de passage (40) sont reliés en écoulement en dehors de la première et seconde zone d'accumulation (72, 74) au moyen d'une liaison d'écoulement (80).

4. Accumulateur d'énergie selon l'une des revendications précédentes, **caractérisé en ce que** l'un des dispositifs de passage (30, 40) est agencé de manière contiguë à une première extrémité (22) de l'étendue longitudinale (20) et l'autre des dispositifs de passage (40, 30) est agencé de manière contiguë à une extrémité opposée (24) de l'étendue longitudinale (20) de l'échangeur de chaleur d'extraction (60).

5. Accumulateur d'énergie selon l'une des revendications précédentes, **caractérisé en ce que** dans un état d'intégration selon les dispositions les dispositifs de passage (30, 40) sont agencés en direction de l'étendue longitudinale (20) l'un au-dessus de l'autre.

6. Accumulateur d'énergie selon l'une des revendications précédentes, **caractérisé en ce qu'**au moins un des dispositifs de passage (30, 40) présente une section de passage (32, 42) avec des ouvertures de passage pour le fluide d'accumulation (50) qui sont réparties le long d'une étendue longitudinale de la section de passage (32, 42), sont réparties en particulier de manière équidistante.

7. Accumulateur d'énergie selon l'une des revendications précédentes, **caractérisé en ce qu'**un des dispositifs de passage (40, 30) est agencé dans une zone (76) sans fluide d'accumulation pendant le fonctionnement dans le carter (10).

8. Accumulateur d'énergie selon la revendication 7, **caractérisé en ce que** le dispositif de passage (40) est agencé au-dessus de la première zone d'accumulation (72) et la section de passage (42) de ce dispositif de passage (40) recouvre au moins par endroits une section transversale (78) de la première zone d'accumulation (72).

9. Accumulateur d'énergie selon l'une des revendications 7 à 8, **caractérisé en ce que** la section de passage (42) du second dispositif de passage (40) est adaptée à une forme de la section transversale (78) de la première zone d'accumulation (72).

10. Accumulateur d'énergie selon l'une des revendications précédentes, **caractérisé en ce que** le second dispositif de passage (40) est prévu pour l'introduction de la phase liquide (54) dans le carter (10) et le premier dispositif de passage (30) est prévu pour la conduite de la phase liquide (54) hors du carter (10).

11. Accumulateur d'énergie selon l'une des revendications précédentes, **caractérisé en ce qu'**un dispositif de commutation (84) est prévu afin de prescrire un sens d'écoulement de la phase liquide (54) du fluide d'accumulation (50) dans la liaison d'écoulement (80) entre le premier et second dispositif de passage (30, 40), en particulier en fonction de paramètres de fonctionnement de l'accumulateur d'énergie.

12. Accumulateur d'énergie selon l'une des revendications précédentes, **caractérisé en ce que** la phase solide (52) du fluide d'accumulation (50) est réalisée dans la première zone d'accumulation (72) sensiblement comme un monolithe.

13. Accumulateur d'énergie selon l'une des revendications précédentes, **caractérisé en ce que** la première zone d'accumulation (72) est réalisée de sorte que la phase solide (52) du fluide d'accumulation (50) forme, à la fin d'une phase de solidification prescrite, des coques concentriques (73) qui sont espacées par une phase liquide (54).

14. Accumulateur d'énergie selon l'une des revendications précédentes, **caractérisé en ce que** la liaison d'écoulement (80) du premier dispositif de passage (30) et second dispositif de passage (40) comprend un échangeur de chaleur (90), en particulier un échangeur de chaleur à plaques.

15. Accumulateur d'énergie selon l'une des revendications précédentes, **caractérisé en ce que** le premier dispositif de passage (30) est agencé à distance du carter (10).
